Europäisches Patentamt

European Patent Office

Office européen des brevets

(19)

(11) Publication number: **0 108 079**
**B1**

(12) **EUROPEAN PATENT SPECIFICATION**

(45) Date of publication of patent specification: **12.11.86**

(21) Application number: **83901213.5**

(22) Date of filing: **14.04.83**

(88) International application number:
**PCT/GB83/00107**

(87) International publication number:
**WO 83/03801 10.11.83 Gazette 83/26**

(51) Int. Cl.⁴: **B 60 K 17/28, B 60 K 17/34**

(54) **VEHICULE DRIVES.**

(30) Priority: **30.04.82 GB 8212579**

(43) Date of publication of application:
**16.05.84 Bulletin 84/20**

(45) Publication of the grant of the patent:
**12.11.86 Bulletin 86/46**

(84) Designated Contracting States:
**AT BE CH DE FR GB LI NL SE**

(56) References cited:
**AT-B- 355 918**
**DE-C-1 219 335**
**FR-A-2 416 129**

(73) Proprietor: **SOUTH ESSEX MOTORS (BASILDON) LTD**
**Cherrydown East**
**Basildon, Essex SS16 5AQ (GB)**

(72) Inventor: **MAY, Eric**
**43, Cedar Drive Hempstead**
**Near Gillingham Kent (GB)**

(74) Representative: **Arthur, George Fitzgerald et al**
**KILBURN & STRODE 30, John Street**
**London WC1N 2DD (GB)**

Courier Press, Leamington Spa, England.

EP 0 108 079 B1

## Description

This invention relates to vehicle drives, and one object is to provide a four wheel drive which can have a drive shaft for one axle so mounted as not to increase the width of the vehicle in spite of the presence of a power take-off shaft from the vehicle engine.

In many tractors, fork-lift trucks and other vehicles, the engine provides a drive to drive wheels through a conventional differential gear, and also provides a separate power take off shaft from the vehicle engine for use for driving auxiliary equipment, for example, for driving equipment being towed by a tractor. Although it is frequently desirable for a tractor to have a four wheel drive, the arrangements establishing such a drive can be very awkward if the power take-off shaft is in the way and it may be necessary to have a drive shaft extending beside the engine which increases the width of the vehicle.

Steyr's Austrian Patent Specification AT—B—355 918 describes a four wheel drive for a vehicle which includes a drive shaft coupled to means for driving rear wheels on a rear axle and coupled to a forwardly-extending shaft for driving front wheels on a front axle through a transmission including an idler gear, the vehicle having a. power take-off shaft which extends rearwardly and is driven from the vehicle engine independently of the transmission, the power take-off shaft passing within the idler gear below the drive shaft and above the forwardly-extending shaft and in which the idler gear is mounted in relation to the housing on a bearing.

However, Steyr is concerned to provide a power take-off shaft geared to the drive to the axles, and does not deal with the problem of arranging the components in relation to each other or of designing a bearing arrangement for the gears.

According to the present invention the bearing is mounted on a support shaft said support shaft being fixedly secured in the housing, and which support shaft has a through bore in which the take-off shaft passes freely. Thus, rather than allowing the power take-off shaft to be an obstruction against the most easy positioning of the drive to the front wheels on the said other shaft, the support shaft through which passes the power take-off shaft is used to mount the idler gear, so that the power take-off shaft and the transmission gear can rotate independently of one another, although their axles are relatively located.

Frequently, the power take-off shaft will be immediately below the main drive shaft, and then a forwardly extending shaft for driving the front wheels can be positioned below the power take-off shaft and indeed below the vehicle engine.

The invention includes not only the drive itself, and a kit for building it, but also a tractor or other vehicle when fitted with such a drive.

The invention may be carried into practice in various ways, and one embodiment will now be described by way of example, with reference to the accompanying drawings, in which:—

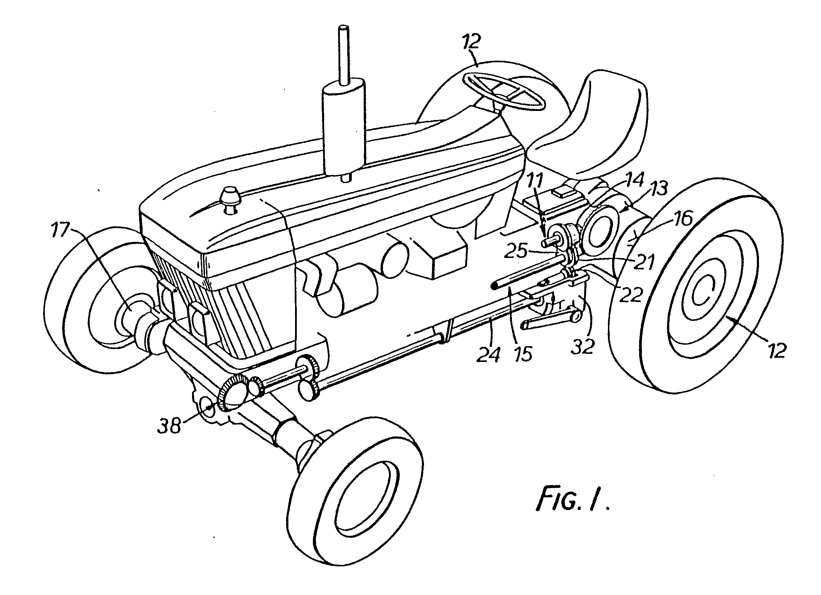

Figure 1 is a perspective view of a tractor fitted with a drive mechanism according to the invention; and

Figure 2 is a detailed view of the front wheel drive take-off arrangement of the tractor in Figure 1.

The tractor is of the kind which is commonly in use according to which a drive shaft 11 from the engine and gearbox drives a differential for the gear wheels 12 including conventional crown wheels 13 and pinion 14.

There is also a power take-off shaft 15 from the engine which extends rearwardly below the drive shaft 11 and has a rear connection behind the rear axle 16 available for equipment whether being towed by the tractor or not, which is to be driven by power derived from the tractor engine.

That arrangement is quite satisfactory where it is only the rear wheels 12 of the tractor that are driven, but if a four wheel drive is required then the presence of the power take-off shaft 15 makes it difficult to provide an easy route for a drive from the drive shaft 11 to the front axle indicated generally at 17.

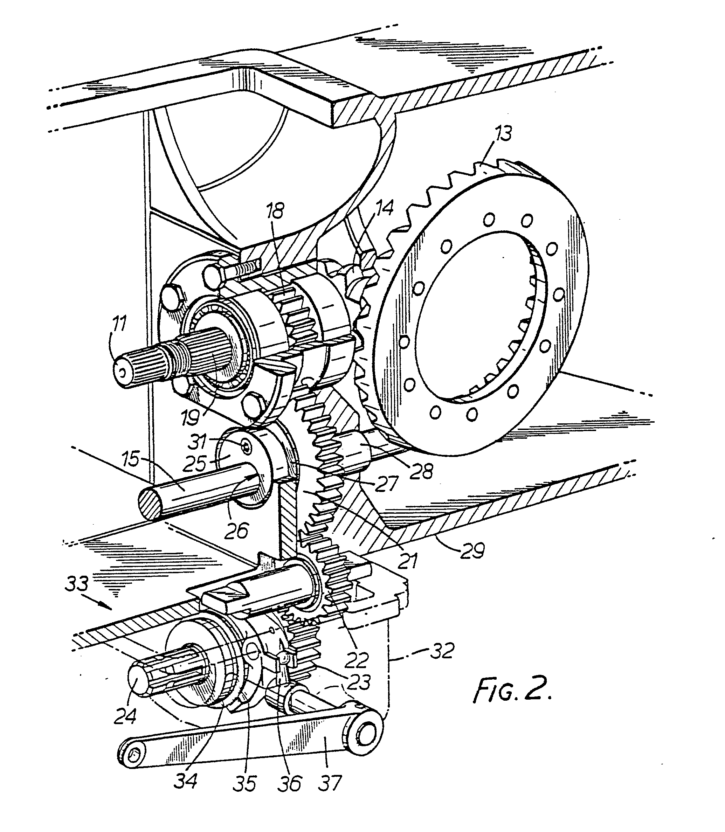

In accordance with the present invention, the drive shaft 11 drives a spur gear 18 (Figure 2) through splines 19, which spur gear 18 is positioned in front of the pinion 14.

The spur gear 18 meshes with an idler spur gear 21 positioned immediately below it, and arranged to drive a further idler gear 22 which in turn drives a spur gear 23 for a drive shaft 24 extending forwardly underneath the body of the tractor.

The power take-off shaft 15 does not interfere with the gear train 18, 21, 22, 23; rather the shaft 15 passes through a support for the gear 21. Since in the embodiment being described, the centre of the gear 21 does not coincide with the axis of the shaft 15, a stub support shaft 25 for the gear 21 has an eccentric bore 26 through which the shaft 15 extends freely. The gear 21 can rotate on the stub shaft 25 through a roller bearing 27. The shaft 15 then passes through a brass bush 28 in the rear axle housing 29 and extends rearwardly to the power take-off point. For a different train of gears, the bore 26 might be less eccentric of the stub shaft 25, or might be coaxial with it.

The stub shaft 25 is located in relation to the housing 29 by a bolt 31.

The forward drive shaft 24 is mounted in a transfer gear box 32 mounted below the housing 29. The box 32 includes a clutch 33 comprising a splined sleeve 34 slidable in relation to the shaft 24 and the gear 23 by operation of a selector fork 35 by a crank pin 36 and an external lever 37. That enables the front wheel drive to be disengaged either mechanically or hydraulically when required. The shaft 24 extends forward in a conventional manner to a crown wheel and pinion differential arrangement for the front axle 17, as shown at 38.

The invention not only enables a four wheel drive to be provided very neatly and without increasing the width of the tractor, in spite of the tractor having a power take-off shaft below the main drive shaft; it also enables an existing rear-wheel-drive tractor to be fairly readily converted to have the four wheel drive. A new rear axle centre housing 29 is required in addition to the components illustrated in Figure 2, for driving the shaft 24 from the main drive shaft 11.

The invention can be applied to other vehicles than tractors, and in general to any vehicle such as a dumper, a fork-lift truck, and a digger, in which a power take-off shaft is provided vertically below a main drive shaft. The problem of obstruction of the drive by the power take-off shaft is solved.

The gear train 18, 21, 22, 23 could be in front of, or behind, a vertical transverse wall of the housing 29, whichever is the most convenient.

### Claims

1. A four wheel drive for a vehicle including a drive shaft (11) coupled to means (14, 13) for driving rear-wheels (12) on a rear-axle (16) and coupled to a forwardly-extending shaft (24) for driving front-wheels on a front-axle (17) through a transmission (18, 21, 22, 23) including an idler gear (21), the vehicle having a power take-off shaft (15) which extends rearwardly and is driven from the vehicle engine, independently of the transmission, and the power take-off shaft (15) passes within the idler gear (21) immediately below the drive shaft (11) and above the forwardly-extending shaft (24) and in which the idler gear (21) is mounted in relation to the housing (29) on a bearing (27) characterised in that said bearing (27) is mounted on a support shaft (25), said support shaft (25) being fixedly secured in the housing (29) and which support shaft (25) comprises a through bore (26) in which the taken-off shaft passes freely.

2. A drive as claimed in Claim 1 characterised in that the bore (26) in the support shaft (25) is eccentric of the bearing axis.

3. A drive as claimed in Claim 1 or 2 characterised in that the forwardly extending shaft (24) is positioned below the vehicle engine.

4. A drive as claimed in any preceding claim, characterised by a clutch (33) associated with the forwardly extending shaft (24) for the front axle (17).

5. A vehicle fitted with a four wheel drive as claimed in any of Claims 1—4.

6. A four wheel drive as claimed in any of Claims 1—4, characterised in that it comprises a kit including the said idler gear (21), the said bearing (27) for mounting the idler gear (21) in relation to the housing (29), and the said support shaft (25) defining within the idler gear the bore (26) for the power take-off shaft (15) to pass freely through, and a gear (18) for taking drive from the drive shaft (11) to the idler gear (21).

### Patentansprüche

1. Vierrad-Fahrzeugantrieb mit einer Antriebswelle (11), die mit einer Einrichtung (14, 13) zum Antrieb von hinteren Rädern (12) auf einer hinteren Achse (16) sowie mit einer sich nach vorne erstreckenden Welle (24) zum Antrieb von Vorderrädern auf einer vorderen Achse (17) über ein Getriebe (18, 21, 22, 23) verbunden ist, das ein Zwischenzahnrad (21) aufweist, wobei das Fahrzeug eine Leistungs-Abzweigwelle (15) besitzt, die sich nach hinten erstreckt, unabhängig vom Getriebe vom Fahrzeugmotor angetrieben wird und direkt unterhalb der Antriebswelle (11) sowie oberhalb der sich nach vorne erstreckenden Welle (24) durch das Zwischenzahnrad (21) hindurchtritt, und wobei das Zwischenzahnrad (21) gegenüber dem Gehäuse (29) auf einem Lager (27) angebracht ist, dadurch gekennzeichnet, daß das Lager (27) auf einer Stützwelle (25) sitzt, die im Gehäuse (29) befestigt ist und die eine Durchgangsöffnung (26) aufweist, durch welche die Leistungs-Abzweigwelle frei hindurchtritt.

2. Antrieb nach Anspruch 1, dadurch gekennzeichnet, daß die Öffnung (26) in der Stützwelle (25) exzentrisch zur Lagerachse ist.

3. Antrieb nach Anspruch 1 oder 2, dadurch gekennzeichnet, daß die sich nach vorne erstreckende Welle (24) unterhalb des Fahreugmotors angeordnet ist.

4. Antrieb nach einem der vorhergehenden Ansprüche, gekennzeichnet durch eine Kupplung (33), die der sich nach vorne erstreckenden Welle (24) für die vordere Achse (17) zugeordnet ist.

5. Fahrzeug ausgestattet mit einem Vierradantrieb nach einem der Ansprüche 1 bis 4.

6. Vierradantrieb nach einem der Ansprüche 1 bis 4, dadurch gekennzeichnet, daß er einen Bausatz enthält, der das Zwischenzahnrad (21), das Lager (27) zur Aufnahme des Zwischenzahnrads (21) bezüglich des Gehäuses (29), die Stützwelle (25), die innerhalb des Zwischenzahnrads (21) die Durchgangsöffnung (26) ausbildet, durch welche die Leistungs- Abzweigwelle (15) frei hindurchtreten kann, sowie ein Zahnrad (18) zum Übertragen des Antriebs von der Antriebswelle (11) auf das Zwischenzahnrad (21) umfaßt.

### Revendications

1. Transmission à quatre roues motrices pour un véhicule comprenant un arbre d'entraînement (11) accouplé à un dispositif (14, 13) pour entraîner les roues arrière (12) sur un essieu arrière (16) et à un arbre s'étendant vers l'avant (24) pour entraîner les roues avant sur un essieu avant (17) par l'intermédiaire d'une boîte de renvoi (18, 21, 22, 23) comprenant une roue dentée intermédiaire (21), le véhicule comportant un arbre de prise de force (15) qui s'étend vers l'arrière et est entraîné par le moteur du véhicule, indépendamment de la boîte de renvoi, et l'arbre de prise de force (15) passant dans la roue dentée intermédiaire (21) immédiatement en dessous de l'arbre d'entraînement (11) et au-dessus de l'arbre s'étendant vers l'avant (24), et dans laquelle la roue dentée intermédiaire (21) est montée par rapport au carter (29) sur un palier (27), caractérisée en ce que le palier (27) est monté sur un arbre de support, l'arbre de support (25) étant fixé à demeure dans le carter (29) et cet arbre de support 25 comprenant un alésage de traversée (26) dans lequel l'arbre de prise de force passe librement.

2. Transmission suivant la revendication 1, caractérisé en ce que l'alésage (26) de l'arbre de support (25) est excentrique par rapport à l'axe du palier.

3. Transmission suivant la revendication 1 ou 2, caractérisée en ce que l'arbre s'étendant vers l'avant (24) est positionné en-dessou du moteur du véhicule.

4. Transmission suivant l'une quelconque des revendications précédentes, caractérisée par un embrayage (33) associé à l'arbre s'étendant vers l'avant (24) pour l'essieu avant (17).

5. Véhicule équipé d'une transmission à quatre roues motrices suivant l'une quelconque des revendications 1 à 4.

6. Transmission à quatre roues motrices suivant l'une quelconque des revendications 1 à 4, caractérisé en ce qu'elle comprend un nécessaire comprenant la roue dentée intermédiaire (21), le palier (27) pour monter la roue dentée intermédiaire (21) par rapport au carter (29) et l'arbre de support (25) définissant, dans la roue dentée intermédiaire, l'alésage (26) dans lequel l'arbre de prise de force (15) passe lirebement, et une roue dentée (18) pour transférer la force motrice de l'arbre d'entraînement (11) à la roue dentée intermédiaire (21).

FIG. 1.

0 108 079

FIG. 2.